# EUROPEAN PATENT SPECIFICATION

(11) **EP 4 413 333 B1**
(45) Date of publication and mention of the grant of the patent: **08.07.2026**
(21) Application number: 22797359.1
(22) Date of filing: 29.09.2022
(51) Int. Cl.: G01N 35/10, G01N 35/04, G01F 22/00, G01F 23/20, G01N 35/00

(54) **ANALYSIS PREPARATION CUVETTE RACK UNIT**
ANALYSEVORBEREITUNGS-KÜVENNTENSTÄNDEREINHEIT
UNITÉ DE SUPPORT POUR CUVETTES DE PRÉPARATION D'ANALYSE

(30) Priority: 07.10.2021 DE 102021126081
(43) Date of publication of application: 14.08.2024
(73) Proprietor: Hach Lange GmbH, 14163 Berlin (DE)
(72) Inventor: GOLITZ, Andreas, 14163 Berlin (DE); KUSSMANN, Michael, 14163 Berlin (DE)
(74) Representative: terpatent PartGmbB
(86) International application number: PCT/EP2022/077211
(87) International publication number: WO 2023/057318

(56) References cited:
- EP-A1- 3 249 386
- WO-A1-99/42841

## Description

The invention relates to a cuvette rack unit for the analysis preparation of a so-called cuvette, i.e. for holding a sample cuvette during the preparation of the sample cuvette for the quantitative determination of an analyte of a liquid sample in a separate analysis unit.

The sample cuvette is a sample container that is usually provided ready-to-use for the determination of a specific analyte of a liquid sample, in that the solid or liquid reagent is usually already introduced into the respective sample cuvette by the manufacturer. For sample preparation, a defined volume of the liquid sample is pipetted into the cuvette already filled with the reagent. Since the ratio of the sample volume to the reagent volume is relatively small, for example less than 50, volumetric pipetting errors as so-called dilution errors can have a considerable influence on the accuracy of the quantitative determination of the analyte that has been changed in colour by the reagent, for example, and is quantitatively determined photometrically.

From EP 3 249 386 A1 a photometric laboratory analyser is known which accurately determines the pipetted liquid sample volume by means of a scale integrated into the analyser, so that the quantitative pipetting error can subsequently be taken into account in a corresponding correction of the raw analytical reading determined by the analyser photometer. This considerably improves the accuracy and reliability of the quantitative determination of the analyte in the liquid sample.

Initially, the sample cuvette containing the reagent is inserted into the analyser so that an empty measurement of the sample cuvette mass can be carried out. Then a defined volume of the liquid sample is pipetted into the sample cuvette using a pipette. A typical sample volume is in the range of a few millilitres. The integrated scale is then used to determine the mass of the sample cuvette again, and from this the actual pipetted liquid sample volume is determined, and a corresponding correction factor for the quantitative, for example photometric, determination of the analyte is determined and stored.

After the reagent has reacted with the analyte in the liquid sample, which may take 10-20 minutes, for example, the raw quantitative determination of the concentration of the analyte in the liquid sample is carried out, for example photometrically. Subsequently, the analysis or concentration raw measurement value is corrected with the correction factor to a volume-corrected concentration or analysis true measurement value and is output. The analyser is thus blocked for 15-30 minutes, in particular because of the required waiting time for the reaction, and cannot be used for the photometry of another sample cuvette during this time.

WO 99 42841 A1 discloses a clinical automatic analysis system with a rotating cuvette holding wheel and a reading device for reading a cuvette information carrier.

Against this background, the object of the invention is to provide a device which allows a better degree of utilisation of the laboratory analyser.

This object is solved according to the present invention with an analysis preparation cuvette rack unit having the features of claim 1.

The analysis preparation cuvette rack unit is an additional separate device provided to the, for example, photometric analyser unit, which is used for the complete sample preparation, so that during the sample preparation the analyser unit is not blocked by the sample cuvette. Furthermore, spilled liquid is kept away from the sensitive analyser unit during sample preparation.

The cuvette rack unit does not comprise an analyser, e.g. does not comprise a photometric or other quantitative determination device for the quantitative determination of the analyte in the liquid sample of the sample cuvette. In the present case, an analyte is basically any chemical or physical parameter of the liquid, for example the chemical oxygen demand.

Each sample cuvette comprises an information carrier containing a cuvette identification, i.e. stored in a readable manner, so that each sample cuvette can be identified by a corresponding reading device that reads the cuvette identification. Preferably, the cuvette identification is a unique cuvette identification. The analysis preparation cuvette rack unit according to the present invention comprises a corresponding reading device for reading the unique cuvette identification.

The cuvette rack unit further comprises a cuvette platform for holding and supporting the sample cuvette in an upright position. The cuvette platform seats on a platform scale so that the platform scale can determine the weight force or mass of the sample cuvette held by the cuvette platform. The cuvette rack unit further comprises an analysis preparation control for storing and transmitting a sample volume parameter V based on a sample cuvette weight value together with the associated read out cuvette identification I. The sample volume parameter V is transmitted to the separate analysis preparation control. The transmission is to the separate, remote and scale-less analysis unit, which comprises a quantitative analyte analyser, for example a photometer.

In the present case, by a remote placement it shall be understood only that the analysis unit on the one hand and the cuvette rack unit on the other hand are respectively a separate autonomous physical unit, which are not combined in one unit, and therefore do not have to be located at a certain distance from each other. However, it is advantageous not to place the analysis unit immediately adjacent to the cuvette rack unit so as not be affected in case of spillage of liquids during the analysis preparation.

The complete analysis preparation is carried out with the sample cuvette placed in the cuvette rack unit, and follows the known process pattern: First, the sample cuvette, which preferably already contains the reagent, is placed on the cuvette platform of the cuvette rack unit so that the sample cuvette stands upright on the cuvette platform and the cuvette identification can be read in. If this has not yet been done, the sealing cap is removed from the sample cuvette. The platform scale of the cuvette rack unit now carries out an empty measurement of the sample cuvette, including the reagent that is preferably already placed in it by the manufacturer, and the measured empty weight value is stored together with the cuvette identification. Subsequently, a defined liquid sample volume is then pipetted into the sample cuvette using a suitable pipette. A typical defined liquid sample volume is in the order of a few millilitres. Subsequently, a full measurement is carried out with the platform scale so that the actual pipetted volume of the liquid sample can be determined exactly from the difference between the first weight determination and the second weight determination.

The platform scale comprises a sufficiently high accuracy or resolution, for example a resolution of 0.01 g, and can therefore determine the liquid volume of the pipetted liquid sample in the sample cuvette at a target liquid sample volume of, for example, 2.0 ml with a resolution of 0.01 ml, so that in this way a deviation of the actual from the actually pipetted target liquid volume of 0.50 % can theoretically already be determined.

The use of a precision pipette, which is expensive and error-prone, can therefore be avoided.

If there is a large discrepancy between the actual and the target volume of, for example, more than 25%, an error message can be issued.

The cuvette rack unit is controlled by the integrated analysis preparation control, which also receives and evaluates the weight values determined respectively by the platform scale. From this, the control unit determines a sample volume parameter V, which in the present case is to be understood universally and can, for example, be the absolute actual sample liquid volume determined from the weight values or already a dimensionless correction factor determined from this. The analysis preparation control sends the said sample volume parameter V and the assigned cuvette identification I to the separate analysis unit.

The analysis unit also comprises a reading device for reading the cuvette identification I of the sample cuvette information carrier of the sample cuvette. Once the reagent has reacted with the liquid sample, which may take, for example, 10-20 minutes, the sample cuvette is manually removed from the cuvette holder unit and placed in the laboratory analysis unit. The reading device of the analysis unit reads the cuvette identification from the information carrier of the sample cuvette, performs with its analyte analyser a quantitative determination of the analyte in the liquid sample of the sample cuvette, and corrects the raw analytical reading thus obtained with the sample volume parameter V transmitted for this cuvette identification, thus obtaining a corrected concentration real value for the specific analyte of the liquid sample.

The relatively expensive analysis unit is thus used exclusively for the quantitative determination of the analyte, but not for the preparation of the analysis, and is protected from contamination.

The sample cuvette may comprise a writable data storage, so that the sample volume parameter is stored on the writable data storage of the cuvette, and the sample volume parameter is transported by the cuvette itself to the analysis unit, where it is read out again.

Preferably, the cuvette rack unit comprises a transmitter/receiver unit that is informationally connectable or connected to the analysis preparation controller. The transmitter/receiver unit transmits the sample volume parameter and the corresponding cuvette identification to the analysis unit. The transmitter/receiver unit can be configured in such a way that the transmission takes place wirelessly, for example, but it can also take place via a signal cable.

Preferably, the information carrier carrying the cuvette identification is a label and the reading device of the cuvette rack unit or the analysis unit is a camera that optically detects the cuvette identification on the label. The label can be, for example, a film-like label applied to the outside of the glass body of the sample cuvette. The cuvette identification as well as further information, such as the parameter to be determined, the measuring range, a batch number, a correction value etc. can be stored on the label in the form of a two-dimensional barcode.

The camera can be arranged in such a way that the label of the sample cuvette can only be read when the sample cuvette is placed in the cuvette platform. For alignment of the label with the camera, the sample cuvette may have to be rotated manually until an acknowledgement signal is emitted. Alternatively or additionally, the cuvette may comprise a mark or a protrusion that indicates or provides the required rotational alignment with the reader.

Preferably, an optical weighing information display associated with the analysis preparation control is provided. The information display can monitor the entire process of analysis preparation or sample preparation. For example, an acknowledgement signal can be output via the information display as soon as the sample cuvette information carrier or the cuvette identification stored on it has been read in. Furthermore, an error signal can be output if the pipetted sample volume after weighing exceeds a target value, e.g. by more than 25 % of the liquid sample target volume. Furthermore, the information display can output a visual acknowledgement signal as soon as the empty measurement has been successfully carried out and/or the weighing of the sample cuvette filled with the liquid sample has been successfully carried out.

Preferably, the cuvette rack unit comprises at least one weighing control input key connected to the analysis preparation control. For example, pressing the input key can initiate the first weighing for the blank measurement, and can initiate the second weighing (full measurement) after the liquid sample has been added. Furthermore, the user can enter an acknowledgement if necessary.

Preferably, the cuvette rack unit comprises an electric connector plug connected to the analysis preparation control for directly connecting another cuvette rack unit. Several cuvette rack units can be electrically and informationally connected together in this way. In this way, different cuvette rack unit equipment variants can also be connected together, whereby a master cuvette rack unit is fully equipped, but the slave cuvette rack unit, for example, does not comprise a transmitter/receiver unit, but uses the transmitter/receiver unit of the master cuvette rack unit.

Of course, the described device and method can also be used to accurately determine the pipetted amount of further liquid reagents.

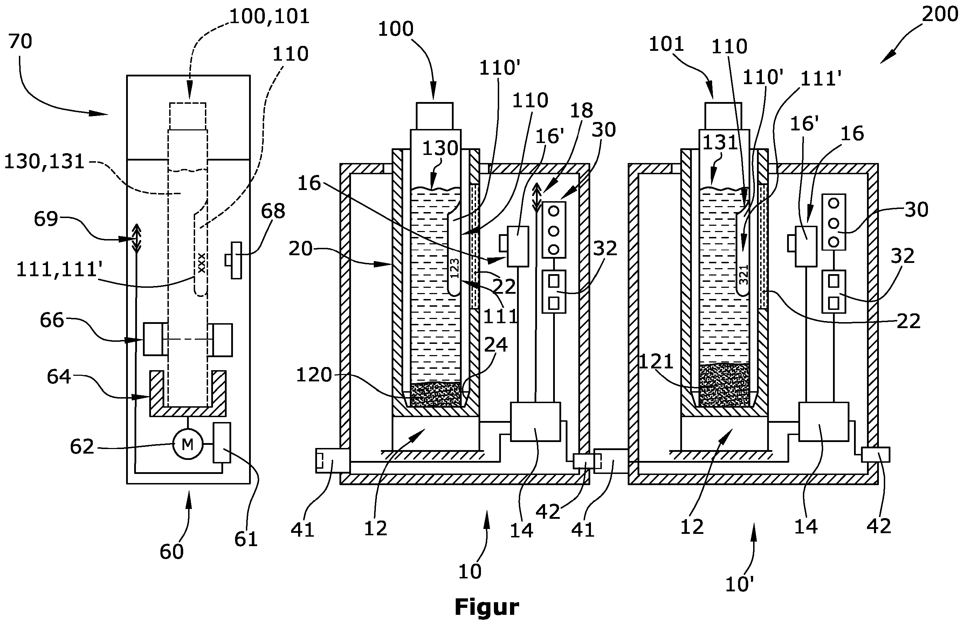

In the following, an embodiment of the invention will be explained in more detail with reference to the drawing. The figure schematically shows an arrangement consisting of two analyser-free cuvette rack units for analysis preparation according to the present invention and a balance-free analysis unit.

The figure shows a laboratory arrangement 200 consisting of a balance-free analysis unit 60 and two separate cuvette rack units 10,10' for analysis preparation. A typical laboratory arrangement can also comprise further cuvette rack units 10,10' so that, for example, 5-10 quantitative determinations can be prepared at the same time.

The cuvette rack unit 10,10' comprises a cuvette platform 20 in a cuvette rack unit housing for holding a sample cuvette 100,101. The cup-like cuvette platform 20 stands on a platform scale 12 for weight determination. The platform scale 12 has, for example, a measuring range of 300 g with a resolution of 0.01 g. A sample cuvette 100, 101 can be inserted into the cuvette platform 20, which is thus held vertically upright by the cuvette platform 20. At the lower vertical end, the cuvette platform 20 comprises a centering cone 24, which causes the inserted sample cuvette 100, 101 to be accurately centered in the cuvette platform 20, thereby increasing the weighing accuracy.

The platform scale 20 determines the total weight of the cuvette platform 20 and the sample cuvette 100,101.

The sample cuvette 100,101 consists of a transparent glass cuvette body into which a dry reagent 120,121 has already been introduced by the manufacturer and which is closed in the delivery state by a sealing cap not shown. The sample cuvette 100,101 comprises on the outside as an information carrier 110 a label 110' which comprises, among other things, a unique cuvette identification 111,111' in the form of a number and/or a two-dimensional barcode. Furthermore, the information carrier 110 may also contain information about the chemical parameter to be determined, the measuring range, a batch number, correction values, etc., or it may contain an address or identification for accessing the respective information.

The cuvette rack unit 10, 10' further comprises an optical reading device 16 in the form of a camera 16' behind a transparent lateral cuvette rack window 22, which optically detects the information carrier 110 of an inserted sample cuvette 100, 101 and, after a respective evaluation, determines in particular the unique cuvette identification 111; 111'.

The sample cuvette 100,101 may respectively comprise a rotational marking visible from above, which facilitates the rotational alignment of the label 110' of the already inserted sample cuvette 100,101 with the reading device 16.

The cuvette rack unit 10,10' further comprises an analysis preparation control 14, respectively, which is informationally connected to the platform scale 12, the reading device 16, an optical information display 30, an input key 32, and two connector plugs 41,42, respectively.

The optical information display 30 can be configured very simply and can consist, for example, of three light-emitting diodes which can indicate various operating states or device-side acknowledgements, for example the recognition of a valid cuvette identification, the confirmation of a valid empty measurement and/or the confirmation of a valid sample volume parameter determination.

The input key 32 may be used, for example, to enter a user-side acknowledgement or, for example, to initiate a transfer of data from a cuvette rack unit 10,10' to the analysis unit 60.

In the present case, two different cuvette rack units 10,10' are shown. A single master cuvette rack unit 10 additionally comprises a transmitter/receiver unit 18, which in the present case is configured wirelessly in the form of an antenna and is powered and read by the analysis preparation controller 14. The other slave cuvette rack unit 10' does not comprise its own transmitter/receiver unit 18, but uses the transmitter/receiver unit 18 of the master cuvette rack unit 10 via the signal connection which is established electrically via the connector plugs 41, 42. Furthermore, in an alternative embodiment, it can be provided that only the master cuvette rack unit 10 comprises an analysis preparation control 14, which also controls all connected slave cuvette rack units 10', which in turn do not comprise their own analysis preparation control 14. In this way, the overall cost of a multi-unit arrangement of cuvette rack units can be kept relatively low.

The photometric analysis unit 60 comprises a turntable 64 at the lower end of a vertical cuvette compartment, on which a sample cuvette 100;101 placed in the analysis unit 60 or the cuvette compartment stands, and which can be rotated by a turntable motor 62. The analysis unit 60 comprises a transmissive photometer 66 that determines, at one or more discrete wavelengths, the transmittance or absorbance of a liquid sample 130,131 in the sample cuvette 100,101. Above the photometer 66, a reading device 68 in the form of a camera is provided for reading the information stored on the sample cuvette information carrier 110. Further, the analysis unit 60 comprises an analysis unit controller 61 and a wireless transmitter/receiver unit 69 configured as an antenna for wireless communication with the transmitter/receiver unit 18 of the master cuvette rack unit 10. The analysis unit 60 comprises a cuvette compartment cover 70 which closes the cuvette compartment in a light-tight manner, in particular during photometry. The cuvette rack units 10,10', on the other hand, do not comprise such a lid, so that the cuvette receptacles of the cuvette rack units 10,10' are always optically not closed.

Sample preparation or analysis preparation starts with a first sample cuvette 100, the cap of which has been unscrewed and which contains a dry reagent 120, being inserted into the first cuvette rack unit 10 so that the sample cuvette 100 is centred on the cuvette platform 20. The user then presses the input key 32, whereupon the analysis preparation control 14 on the one hand causes the sample cuvette 100 to be weighed and on the other hand causes the cuvette identification 111 to be read out by the camera 16' and both values to be stored. As soon as this has been done, the control 14 causes a corresponding optical acknowledgement signal to be output on the information display 30, signalling that the liquid sample is ready to be pipetted.

The user then pipettes, for example, 1.0 ml of a liquid sample 130 into the sample cuvette 100, presses the input key 32, and the control unit 14 initiates a new weighing and stores the weight value determined in the process. The difference is determined from the two stored weight values and set in relation to the target volume value of the liquid sample of, for example, 1.00 ml. This ratio is the sample volume parameter V, which is then transmitted to the analysis unit control 61 via the transmitter/receiver units 18,69 together with the corresponding cuvette identification 111. If, however, the target volume differs from the measured actual volume of the liquid sample by more than 25 %, an error message is displayed on the information display 30 and further analysis preparation is blocked.

Subsequently, the sealing cap is screwed onto the sample cuvette 100 and the sample cuvette 100 can be shaken manually for a quick and homogeneous mixing of the reagent 120 with the liquid sample 130 and finally is set back into the cuvette rack unit 10 for the time of the reaction.

Simultaneously or subsequently, the same procedure can be performed with a second sample cuvette 101 containing a second reagent 121, a second liquid sample 131 and the second cuvette rack unit 10'.

Once a predefined time interval for the chemical reaction has elapsed, the analysis preparation control 14 causes the information display 30 to indicate this so that the sample cuvette 100,101 in question can subsequently be removed from the cuvette rack unit 10,10' in question and inserted into the analysis unit 60.

There, the driven turntable 64 rotates the sample cuvette 100 until the reading device 68 can read out the cuvette identification 111 on the information carrier 110, so that the analysis unit control 61 can then configure the photometry. The raw analysis value or raw concentration value of the analyte or parameter to be determined is corrected, if necessary, with the aid of the transmitted sample volume parameter V, in order to compensate in this way for any dilution error that may be present, and to be able to output a corrected real concentration value for the parameter of the liquid sample.

## Claims

1. A cuvette rack unit (10;10') for analysis preparation, comprising
a cuvette platform (20) for holding upright a sample cuvette (100;101), and
a platform scale (12) for determining a weight value of the sample cuvette (100;101) held by the cuvette platform (20),
**characterized in that** the sample cuvette (100; 101) comprises a cuvette identification (111; 111') on a sample cuvette information carrier (110),
and further **characterized by**
a reading device (16) for reading the unique cuvette identification (111;111') of the sample cuvette information carrier (110) of the sample cuvette (100;101) held by the cuvette platform (20), and
an analysis preparation controller (14) informationally connected to the platform scale (12) and the reading device (16) for storing and transmitting a sample volume parameter (V) based on the weighed sample cuvette weight value together with the associated read cuvette identification (111;111') to a separate analyser (60) comprising a quantitative analyte analyser (66),
wherein the cuvette rack unit (10;10') does not comprise an analyte analyser.

2. The cuvette rack unit (10) according to claim 1, wherein a transmit/receive unit (18) informationally connected to the analysis preparation controller (14) is provided, which transmits the sample volume parameter (V) and the corresponding cuvette identification (111;111') to the analyzer (60).

3. The cuvette rack unit (10;10') according to any one of the preceding claims, wherein the information carrier (110) is a label (110') and the reading device (16) is a camera (16').

4. The cuvette rack unit (10';10') according to any one of the preceding claims, wherein an optical information display (30) connected to the analysis preparation control (14) is provided.

5. The cuvette rack unit (10;10') according to any one of the preceding claims, wherein an input key (32) associated with the analysis preparation control (14) is provided.

6. The cuvette rack unit (10;10') according to any one of the preceding claims, wherein an electric connector (41,42) connected to the analysis preparation control (14) is provided for directly connecting a further cuvette rack unit (10';10).

7. An arrangement (200) comprising a cuvette rack unit (10) according to any one of the preceding claims and a separate scale-free analyser unit (60) comprising a quantitative analyte analyser (66), the analyser (60) comprising an analyser controller (61), a transmit/receive unit (69) for communicating with the transmit/receive unit (18) of the analysis preparation cuvette rack unit (10) for receiving the cuvette identification (111; 111') and the associated sample volume parameter (V), and a reading device (68) for reading the unique cuvette identification (111; 111') of the sample cuvette information carrier (110) of the inserted sample cuvette (100; 101).

## Patentansprüche

1. Eine Küvettengestell-Einheit (10; 10') zur Analysevorbereitung, umfassend
eine Küvetten-Plattform (20) zum aufrechten Halten einer Probenküvette (100; 101),
eine Plattform-Waage (12) zum Bestimmen eines Gewichtswerts der von der Küvetten-Plattform (20) gehaltenen Probenküvette (100; 101),
**dadurch gekennzeichnet, dass** die Probenküvette (100; 101) eine Küvetten-Identifikation (111; 111') auf einem Probenküvetten-Informationsträger (110) aufweist,
und ferner **gekennzeichnet durch** eine Lesevorrichtung (16) zum Lesen der eindeutigen Küvetten-Identifikation (111; 111') des Probenküvetten-Informationsträgers (110) der von der Küvetten-Plattform (20) gehaltenen Probenküvette (100; 101), und
eine Analysevorbereitungs-Steuerung (14), die mit der Plattform-Waage (12) und der Lesevorrichtung (16) zum Speichern und Übertragen eines Probenvolumen-Parameters (V) basierend auf dem gewogenen Probenküvetten-Gewichtswert zusammen mit der zugehörigen gelesenen Küvetten-Identifikation (111; 111') an einen separaten Analysator (60), der einen quantitativen Analyt-Analysator (66) umfasst, informationstechnisch verbunden ist,
wobei die Küvettengestell-Einheit (10; 10') keinen Analyt-Analysator umfasst.

2. Die Küvettengestell-Einheit (10) nach Anspruch 1, wobei eine mit der Analysevorbereitungs-Steuerung (14) informationstechnisch verbundene Sende-/Empfangseinheit (18) vorgesehen ist, die den Probenvolumen-Parameter (V) und die entsprechende Küvetten-Identifikation (111; 111') an den Analysator (60) überträgt.

3. Die Küvettengestell-Einheit (10; 10') nach einem der vorhergehenden Ansprüche, wobei der Informationsträger (110) ein Etikett (110') ist und die Lesevorrichtung (16) eine Kamera (16') ist.

4. Die Küvettengestell-Einheit (10'; 10') nach einem der vorhergehenden Ansprüche, wobei eine mit der Analysevorbereitungs-Steuerung (14) verbundene optische Informationsanzeige (30) vorgesehen ist.

5. Die Küvettengestell-Einheit (10; 10') nach einem der vorhergehenden Ansprüche, wobei eine der Analysevorbereitungs-Steuerung (14) zugeordnete Eingabetaste (32) vorgesehen ist.

6. Die Küvettengestell-Einheit (10; 10') nach einem der vorhergehenden Ansprüche, wobei ein mit der Analysevorbereitungs-Steuerung (14) verbundener elektrischer Konnektor (41, 42) zum direkten Anschließen einer weiteren Küvettengestell-Einheit (10'; 10) vorgesehen ist.

7. Eine Anordnung (200), umfassend eine Küvettengestell-Einheit (10) nach einem der vorhergehenden Ansprüche und eine separate waagenfreie Analysator-Einheit (60), die einen quantitativen Analyt-Analysator (66) umfasst, wobei der Analysator (60) eine Analysator-Steuerung (61), eine Sende-/Empfangseinheit (69) zum Kommunizieren mit der Sende-/Empfangseinheit (18) der Analysevorbereitungs-Küvettengestell-Einheit (10) zum Empfangen der Küvetten-Identifikation (111; 111') und des zugehörigen Probenvolumen-Parameters (V) und eine Lesevorrichtung (68) zum Lesen der eindeutigen Küvetten-Identifikation (111; 111') des Probenküvetten-Informationsträgers (110) der eingesetzten Probenküvette (100; 101) umfasst.

## Revendications

1. Une unité de support de cuvettes (10 ; 10') pour préparation d'analyse, comprenant
une plateforme de cuvette (20) pour recevoir en position verticale une cuvette d'échantillon (100 ; 101),
une balance de plateforme (12) pour déterminer une valeur de poids de la cuvette d'échantillon (100 ; 101) reçue par la plateforme de cuvette (20),
**caractérisée en ce que**
la cuvette d'échantillon (100, 101) comprend une identification de cuvette (111 ; 111') sur un support d'informations de la cuvette d'échantillon (110),
et **caractérisée en outre par** un dispositif de lecture (16) pour lire l'identification unique de cuvette (111 ; 111') du support d'informations de la cuvette d'échantillon (110) de la cuvette d'échantillon (100 ; 101) reçue par la plateforme de cuvette (20), et un contrôleur de préparation d'analyse (14) en liaison de données avec la balance de plateforme (12) et le dispositif de lecture (16), pour mémoriser et transmettre un paramètre de volume d'échantillon (V) sur la base de la valeur de poids déterminée de la cuvette d'échantillon, conjointement avec l'identification de cuvette lue associée (111 ; 111'), à un analyseur séparé (60) comprenant un analyseur quantitatif d'analyte (66),
dans laquelle l'unité de support de cuvettes (10 ; 10') ne comprend pas d'analyseur d'analyte.

2. L'unité de support de cuvettes (10) selon la revendication 1, dans laquelle une unité d'émission/réception (18), en liaison de données avec le contrôleur de préparation d'analyse (14), est prévue, laquelle transmet le paramètre de volume d'échantillon (V) et l'identification de cuvette correspondante (111 ; 111') à l'analyseur (60).

3. L'unité de support de cuvettes (10 ; 10') selon l'une quelconque des revendications précédentes, dans laquelle le support d'informations (110) est une étiquette (110') et le dispositif de lecture (16) est une caméra (16').

4. L'unité de support de cuvettes (10' ; 10') selon l'une quelconque des revendications précédentes, dans laquelle un affichage optique d'informations (30), connecté au contrôleur de préparation d'analyse (14), est prévu.

5. L'unité de support de cuvettes (10 ; 10') selon l'une quelconque des revendications précédentes, dans laquelle une touche d'entrée (32), associée au contrôleur de préparation d'analyse (14), est prévue.

6. L'unité de support de cuvettes (10 ; 10') selon l'une quelconque des revendications précédentes, dans laquelle un connecteur électrique (41, 42), connecté au contrôleur de préparation d'analyse (14), est prévu pour connecter directement une autre unité de support de cuvettes (10' ; 10).

7. Agencement (200) comprenant une unité de support de cuvettes (10) selon l'une quelconque des revendications précédentes et une unité d'analyseur séparée dépourvue de balance (60) comprenant un analyseur quantitatif d'analyte (66), l'analyseur (60) comprenant un contrôleur d'analyseur (61), une unité d'émission/réception (69) pour communiquer avec l'unité d'émission/réception (18) de l'unité de support de cuvettes de préparation d'analyse (10) afin de recevoir l'identification de cuvette (111 ; 111') et le paramètre de volume d'échantillon associé (V), et un dispositif de lecture (68) pour lire l'identification unique de cuvette (111 ; 111') du support d'informations de la cuvette d'échantillon (110) de la cuvette d'échantillon insérée (100 ; 101).
